# EUROPEAN PATENT SPECIFICATION

(11) **EP 1 915 602 B1**
(45) Date of publication and mention of the grant of the patent: **19.03.2014**
(21) Application number: 06779118.6
(22) Date of filing: 11.08.2006
(51) Int. Cl.: G01M 3/20, G01M 3/38

(54) **UNDERWATER REMOTE INSPECTION APPARATUS AND METHOD**
UNTERWASSER-FERNUNTERSUCHUNGSVORRICHTUNG UND -VERFAHREN
APPAREIL ET PROCEDE DE TELEINSPECTION SOUS L'EAU

(30) Priority: 12.08.2005 GB 0516575
(43) Date of publication of application: 30.04.2008
(73) Proprietor: Optima Solutions UK Limited, Aberdeen AB12 3LN (GB)
(72) Inventor: OAG, Jamie, Aberdeen AB24 3BT (GB); BRECHET, Eric, Aberdeen AB24 5 LD (GB)
(74) Representative: Docherty, Andrew John
(86) International application number: PCT/GB2006/002995
(87) International publication number: WO 2007/020392

(56) References cited:
- GB-A- 2 405 467
- US-A- 4 839 914
- US-A- 5 565 981
- US-A1- 2005 156 111

## Description

### Technical field

The invention relates to the design of a remote in-situ underwater inspection apparatus and method for detecting leaks from underwater structures, risers and pipelines. More particularly, it relates to the detection of leaking fluids using fluorescence methods.

### Background

A significant proportion of the world's offshore structures are situated sub-sea or on the seabed. The size of these structures can range from small pipes to big production templates and pipelines that can be hundreds of kilometres long. These structures incorporate pipes, pipelines and risers.

The pipes are filled with a number of different fluids. These fluids can be hydrocarbons, injection water, hydraulic control fluids and a number of other fluids. The temperatures and pressures of these fluids can span over an extended range.

The loss of these fluids represents a financial loss and they can reduce the efficiency of the production. Additionally most of these fluids are harmful to the environment.

To ensure a clean and efficient production and transport of produced hydrocarbons the industry strives to detect and pinpoint leaks in their structures as soon as they occur. Additionally new and future regulations require the undertaking of regular surveys to detect leaks sub-sea.

Large leaks may be detected by monitoring the system internal operation parameters such as monitoring pressure drops in an enclosed system.
Large pipelines can be internally checked using technology such as pig's searching for defects in the pipe.

Other methods used to detect these leaks are using external sensors, for example passive acoustic devices or fluorometers. These sensors can be mounted permanently on sub-sea structure or on underwater vehicles such as Remote Operated Vehicles (ROVs) and Autonomous Underwater Vehicles (AUVs).

The passive acoustic devices detect and analyse the noise generated by fluids or gases when they leak from a pipe. The disadvantage of this method is that it is very difficult to pinpoint the exact location of the leak and that small leaks may not be detected at all.

The fluorescence systems rely on the fact that the leaking fluids fluoresce under certain excitation light. A disadvantage of this method is that the fluids must have a specific fluorescence spectrum that is different from the background fluorescence generated from other materials present in the vicinity such as organic material in the water. Another disadvantage with current systems is that they rely on single point detection methodology, which does not give a direct indication of the location of a leak within a wide field of view. These systems only give an average fluorescence reading in a given region but not visualising the leak. For example it is difficult to locate the exact point of leakage since in large sub-sea systems several pipes can be close together and the leaking fluid may have already diffused into a large volume of the water surrounding the leakage.

The main advantage of a fluorescence sensor is its high sensitivity. Many fluorescent molecules produce very strong signals that can be easily picked up using a number of different sensors.

The problems of the exciting fluorescence based systems can be overcome by the present invention which discloses a novel method for locating the leaking location on the structure and provides a novel design of a fluorosensor apparatus which provides accurate location of the leaking fluids on subsea or underwater structures.

US2005/0156111 describes an imager system for imaging of a leak of fugitive gas dependent upon electromagnetic wavelength absorption of the gas. The imager system comprises a bi-spectral selector assembly which houses first and second filters in separate optical paths for transmittal of electromagnetic energies emanating from the scene of interest. An imager captures the image data and displays it in real time.

GB2405467 discloses a detection apparatus for detecting leaks from structures such as sub-sea pipelines or risers. The detection apparatus comprises a generation means, such as a laser, which is capable of generating radiation, a direction means which is capable of directing the radiation toward the structure and a detection means to detect radiation received such as fluorescence from oil or fluorescent dye leaking from the structure. There is also provided a method of detecting a leak in a structure.

### SUMMARY OF THE INVENTION

According to a first aspect of the invention there is provided an apparatus for detecting leaks of fluorescing material from pipes or containers, the apparatus comprising an exciting means for effecting a fluorescence of the leaking fluid in an area under inspection, a receiving means for receiving a picture of the induced fluorescence from the leaking fluid in the area under inspection, a receiving means for receiving a picture of the observed scene of the area under inspection, a processing means for processing and analysing the received fluorescence-picture of the area under inspection and overlaying it to a live video of the scene of the area under inspection determining the position and strength of the leak. This system makes it easier to locate fluorescence. The system can be used with an audible alarm. Using the real time video speed, the system can be used by an ROV pilot to directly navigate the ROV towards the leak.

The apparatus may comprise an exciter unit and a receiver unit mounted together.

The exciting means may comprise a light-source that projects a beam of light in the direction where the measurement is undertaken.

Preferably, the exciter unit comprises an array of high power light emitting diodes. Preferably, the exciter unit comprises an optical band pass filter to select the preferred excitation wavelength.

Preferably, the receiver unit comprises a high gain imaging camera, typically an intensified camera that is directed in the same direction as the exciter unit. Preferably, the high intensified camera comprises a narrow optical band pass filter to select the preferred fluorescence wavelength which is different to the preferred excitation wavelength.

Preferably, the preferred fluorescence wavelength is out-with the band pass excitation wavelength and in most cases of longer wavelength.

Preferably, the receiver unit comprises a second camera that is directed in the same direction as the exciter unit, to provide an overlay picture of the structure under surveillance. Preferably, the second camera is mounted rigidly to the high intensifier camera.

Preferably, the apparatus comprises a first subsystem located beneath the surface of the water, and a second subsystem located at or above the surface of the water, the first and second subsystems being connected by a communication and power link.

Preferably, the first subsystem comprises an underwater receiving means for receiving a spectrally filtered fluorescence video signal, and a second receiving means for receiving a spectrally unfiltered video signal, and an underwater processing means for relaying the received video signals to the second subsystem.

Preferably, the second subsystem comprises a processing unit, a control unit, and a user interface.

According to a second aspect of the invention, there is provided a method of detecting leaks of fluorescent material, the method comprising the steps of:
- inducing an excitation light onto an area under inspection the structure to be surveyed;
   detecting a filtered intensified fluorescence video signal and relaying the signal from the area under inspection to the second subsystem.
- detecting an unfiltered video signal from the area under inspection and relaying the signal to the second subsystem;
- processing the video signals in a way that the filtered intensified fluorescent video is overlaid onto the unfiltered video and displayed on the user interface;

The method may comprise the additional steps of:
- multiplexing the two video signals in a way that only one video channel is being used to transmit the video signals to the second subsystem, using well known technologies.

The method may comprise the additional steps of:
- saving screenshots or video footages so they can be used for reference or further analysis at a later stage.

The method may comprise the step of transmitting a video signal to a subsystem located at or on the surface of the water.

The invention described is an apparatus and method for detecting leaks of fluorescing material from structures, pipes and containers. The apparatus is designed to be deployed by any standard underwater means such as ROV, AUV, robot or diver and as a permanently fixed addition to underwater structures for constant monitoring.

The apparatus may include means for the induction and recording of fluorescence of leaking material, and the processing and display of the recorded fluorescence video signal. Video signal processing prepares the fluorescence signal in a way that will be displayed on the user interface and can be interpreted by an operator. The deployment of the apparatus and the detection of leakages are conducted underwater.

In the preferred embodiment, the apparatus is made up of two separate parts joined by a communication link. One part is deployed underwater, the other topside such as onboard a floating vessel, offshore platform or other surface facility. The topside part of the apparatus comprises a user interface, a control unit and a processing unit. The underwater part comprises a control unit, an exciting unit and receiving units.

An optional feature of the topside part is an interface allowing the operator to control and monitor the activity of the underwater unit.

Another optional feature of the topside part is a controlling unit that manages the data exchanged between the topside and underwater units.

Another optional feature of the topside part is a processing unit that prepares the data sent by the underwater unit.

An optional feature of the topside processing and control unit is a means to take a screenshot of the overlaid fluorescence video to be used for later references.

Another optional feature of the topside part is the ability to connect to a remote server in order to relay the video signal to a remote point.

An optional feature of the underwater part is that it is ruggedised to a standard adequate to prevent damage to any of its units during underwater deployment.

Another optional feature of the underwater part is that it can be fixed onto a rigid framework designed to bring the exciting unit and the receiving units in the correct position to excite fluorescence in the leaking material, and to receive the resulting video signals.

The framework must also be suitable for deployment by a platform such as an ROV or AUV so that exciting unit and receiving units are brought into correct proximity to the area under inspection.

Another optional feature of the underwater part is a means of conveying the video signal in real time to the topside part so that the leaks can be identified in real time during the course of the inspection.

Another optional feature of the exciting unit is it must be capable of operating underwater down to the operating depth of submersible vehicles.

An optional feature of the receiving units of the underwater part is a means to record a live fluorescence signal of the area under inspection such as an intensified camera with a sensitivity and wavelength range appropriate for detection of the fluorescence. Preferably, a narrow optical band-pass filter is used to select the preferred wavelength for the detection of the fluorescence.

An optional feature of the receiving units of the underwater part is a means to record a live video signal of the area under inspection such as a CCD or CMOS camera with or without intensification with a sensitivity and wavelength range appropriate for imaging of the surveyed area.

### BRIEF DESCRIPTION OF THE DRAWINGS

FIG. 1 is a block diagram illustrating the preferred embodiment of the present invention;
FIG. 2 is a perspective schematic of the preferred embodiment of the apparatus being deployed from an ROV;
FIG. 3 is a schematic of the excitation unit in the pressurised housing;
FIG. 4 is a schematic of the underwater receiver unit showing detail of the intensified camera with the band pass filter, the camera for the unfiltered image and the video relaying unit with the power supply.

### DETAILED DESCRIPTION OF THE INVENTION

Hereinafter, the preferred embodiment of the present invention will be described based on the accompanying drawings.

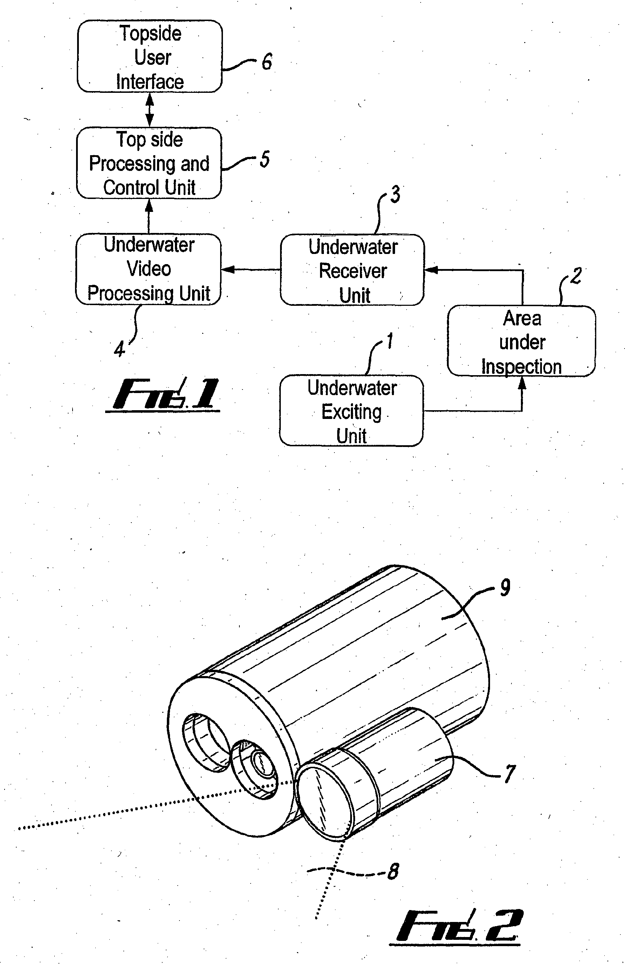

Fig. 1 is a block diagram illustrating the preferred embodiment of the present invention.

In Fig. 1 a inspection apparatus according to the present invention includes an underwater exciting unit 1 for generating a light to be projected onto the area under investigation 2 to induce fluorescence from leaking material in the area under inspection. The fluorescence and light from the area under inspection 2 is detected by the underwater receiving units 3 where the two video signals are being captured and transferred to the underwater video processing unit 4.

The underwater video processing unit 4 relays the two video signals to the top side processing and control unit 5 using well-known techniques. The topside processing and control unit 5 processes and overlays the fluorescent video onto of the unfiltered video, using well-known techniques. The processing may include video noise filtering, particle size analysis, threshold analysis and pattern recognition. The overlaid information can be displayed using a colour coded format related to signal intensity or fluorescence pattern physical properties, such as size or shape.

The topside processing and control unit transfers the processed video signal to the topside user interface 6.

Fig. 2 is a view illustrating a schematic construction of a leak detection apparatus according to the preferred embodiment of the present invention.

The apparatus consists of a pressurised housing 7 which incorporates the underwater excitation unit 1 and a second pressurised housing 9 which incorporates the underwater receiving unit 3 and the underwater video processing unit 4. The underwater excitation unit 1 projects a beam of light 8 onto the area under inspection 2.

The pressurised housing 7 is fixed securely to the pressurised housing 9. Both housings point towards the area under inspection.

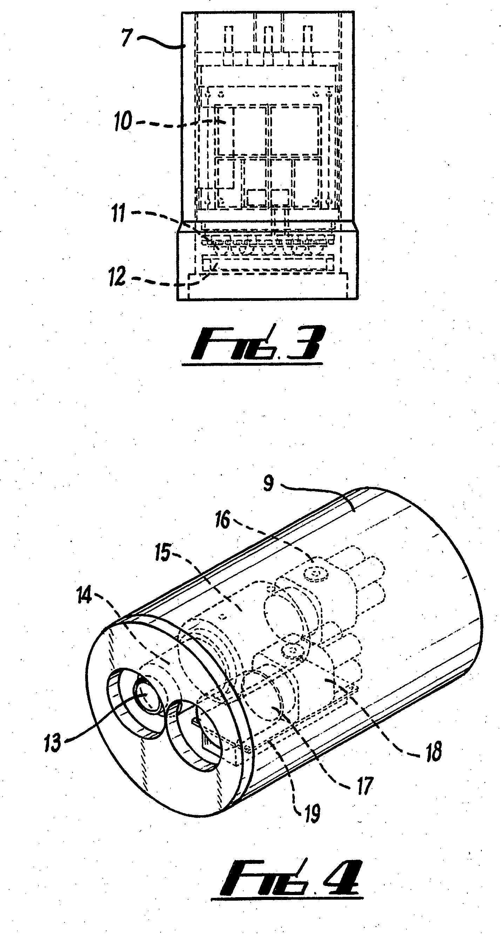

Fig. 3 is a view illustrating a schematic construction of the pressurised housing 7 incorporating the underwater excitation unit 1. The underwater excitation unit 1 consists of a power and control module 10 for the light emitting diode array 11. An optical band pass filter 12 filters the light so that only the preferred excitation light exits the unit.

FIG. 4 is a schematic of the pressurised housing 9 showing detail of underwater receiving unit 3 and the underwater video processing unit 4. The underwater receiving unit 3 consists of a narrow band pass optical filter 13 where the incoming light is filtered to select the preferred wavelength of the target material. The light is then focused using an objective 14. The light is then amplified using an intensification module 15. The intensification module 15 is equipped with an auto gain amplifier so that it enables the system to cope with a wide range of light intensity. The video signal is then captured using a camera 16.

An unfiltered image is captured using a second camera 18 attached to a focusing objective 17.

The two video signals are then transmitted to the topside processing and control unit 5.

The topside processing and control unit 5 applies known video processing techniques to analyse and overlay the two video signals and display them in a way that can be easily interpreted. The process involves softwares that identify the different concentration present in the field of view of the system and displays it on the user interface unit. These video processing techniques are well known to those skilled in the art of video processing.

The status information can then be sent to server networks located anywhere in the world via standard telecommunication means such as radio, telephone and satellite links.

Various modifications may be made within the scope of the invention herein intended.

In one alternative embodiment the system can be used to detect different dyes, optical brighteners, oil and any other products that can fluoresce.

In another alternative embodiment the system can be used for the analysis of living organisms like algae's and corals. For example the system can be used for the analysis of the effectiveness of biocides on living cells and the change in fluorescence can be recorded.

In another alternative embodiment the system can be used for the detection of any fluorescent solids, fluids or gases.

In another alternative embodiment the system can be used for navigational help when finding the source of a leak.

In another alternative embodiment the system can be used for navigational help when under water structures are marked using fluorescent markers.

In another alternative embodiment the system can be used for navigational help when under water structures are marked using different fluorescent markers to allow an automated system to follow the markers and receive information from them.

In another alternative embodiment the system can be used either underwater, on the surface, airborne or in space.

In another alternative embodiment the system can be used with multiple excitation units to increase the range of the system.

In another alternative embodiment the system can be used with multiple excitation units with different wavelength so that different materials can be excited and various materials can be distinguished from one another.

In another alternative embodiment the system can be used with more than one intensified cameras set-up each with a different preferred band pass filter to detect different wavelengths to detect several materials at the same time and distinguish between them.

In another alternative embodiment the excitation unit can be used in a way that the exciting light is modulated. Using further processing of the received video signal it is possible to extract the background signal from the fluorescence signal.

In another alternative embodiment the excitation unit can be used in a way that the exiting light is modulated. Using gated detectors information about the distance to objects in the field of view and the fluorescence can be derived.

In another alternative embodiment the excitation unit can be used in a way that the exiting light is gated. Using gated detectors information about the concentration of the present fluorescing materials can be derived.

In another alternative embodiment the excitation unit can use flash-lamps, lasers, xenon arc lamps and other light sources.

In another alternative embodiment the underwater receiving unit can use cooled CCD cameras and other image producing optical sensors.

In another alternative embodiment in the underwater receiving unit the unfiltered camera can use an intensified camera to enable a better sight of the scene under low light conditions.

In another alternative embodiment in the underwater receiving unit the unfiltered camera can be fitted with an optical filter of preferred wavelength in order to filter unwanted light. This can be used to enhance vision for the operator.

In another alternative embodiment the two subsystems previously described as the complete system can be built as one unit deployed temporarily or permanently underwater. When a pre-specified fluorescence signal is detected the unit can then trigger a response such as activating a communication link or a secondary apparatus linked to it.

In another alternative embodiment the two subsystems previously described as the complete system can be built as one unit built into an apparatus that can be used by a diver. The information will be displayed directly to the diver using a standard incorporated-display.

In another alternative embodiment the fluorescence information can be displayed to the end user using a head-mounted display.

Many of other alternative forms of the present invention will be apparent from the foregoing of methods and apparatus. Accordingly, the structures and techniques hereinabove depicted and described are only illustrative and not intended as limitations to the scope of the present invention.

## Claims

1. Apparatus for detecting leaks of fluorescing material from pipes or containers, the apparatus comprising an exciting means (1) for effecting a fluorescence of the leaking fluid in an area under inspection, a receiving means (3) for receiving a picture of the induced fluorescence from the leaking fluid in the area under inspection, a receiving means for receiving a picture of the observed scene of the area under inspection, a processing means (4) for processing and analysing the received fluorescence-picture of the area under inspection and overlaying it to a live video of the scene of the area under inspection, for determining the position and the strength of the leak.

2. Apparatus according to claim 1 further comprising an exciter unit (1) and a receiver unit (3) mounted together.

3. Apparatus according to claim 1 or 2, in which the exciting means (1) comprises a light-source (11) that projects a beam of light in the direction where the measurement is undertaken.

4. Apparatus according to claim 2 or 3, in which the exciter unit (1) comprises an array of high power light emitting diodes (11).

5. Apparatus according to any of claims 2 to 4, in which the exciter unit (1) comprises an optical band pass filter (12) to select the preferred excitation wavelength.

6. Apparatus according to any one of claims 2 to 5, in which the receiver unit (3) comprises a high gain imaging camera (16) typically an intensified camera that is directed in the same direction as the exciter unit.

7. Apparatus according to claim 6, in which the high intensified camera (16) comprises a narrow optical band pass filter (13) to select the preferred fluorescence wavelength which is different to the preferred excitation wavelength.

8. Apparatus according to claim 7, in which the preferred fluorescence wavelength is out-with the band pass excitation wavelength and in most cases of longer wavelength.

9. Apparatus according to any one of claims 6 to 8, in which the receiver unit (3) comprises a second camera (18) that is directed in the same direction as the exciter unit, to provide an overlay picture of the structure under surveillance.

10. Apparatus according to claim 9, in which the second camera (18) is mounted rigidly to the high intensifier camera (16).

11. Apparatus according to any preceding claim, in which the apparatus comprises a first subsystem (1, 3) located beneath the surface of the water, and a second subsystem (5) located at or above the surface of the water, the first and second subsystems being connected by a communication and power link.

12. Apparatus according to claim 11, in which the first subsystem comprises an underwater receiving means (3) for receiving a spectrally filtered fluorescence video signal, and a second receiving means (3) for receiving a spectrally unfiltered video signal, and an underwater processing means (4) for relaying the received video signals to the second subsystem (5).

13. Apparatus according to claim 11 or 12, in which the second subsystem (5) comprises a processing unit (4), a control unit and a user interface.

14. Apparatus according to any one of claims 11 to 13, in which the second subsystem (5) is configured for connection to a remote server in order to relay the video signal to a remote point.

15. Apparatus according to any one of claims 11 to 14, in which the first subsystem (1, 3) is ruggedised to a standard adequate to prevent damage to any of its units during underwater deployment.

16. Apparatus according to any one of claims 11 to 15 when dependant from claim 2, in which the first subsystem (1, 3) is configured to be fixed onto a rigid framework designed to bring the exciting unit and the receiving units in the correct position to excite fluorescence in the leaking material, and to receive the resulting video signals.

17. Apparatus according to claim 16, in which the framework is configured for deployment by a platform such as an ROV or AUV so that exciting unit and receiving units are brought into correct proximity to the area under inspection.

18. Apparatus according to any one of claims 11 to 17, in which the first subsystem (1, 3) comprises a means of conveying the video signal in real time to the topside part (5) so that the leaks can be identified in real time during the course of the inspection.

19. Apparatus according to claim 2, in which the exciting unit (1) is configured for operation underwater down to the operating depth of submersible vehicles.

20. Apparatus according to claim 2, in which the receiving unit of the first subsystem (1) comprises a means to record a live video signal (16) of the area under inspection.

21. A method of detecting leaks of fluorescent material, the method comprising the steps of:
inducing an excitation light onto an area under inspection of the structure to be surveyed;
detecting a filtered intensified fluorescence video signal from the area under inspection and relaying the signal to the second subsystem;
detecting an unfiltered video signal from the area under inspection and relaying the signal to the second subsystem; and
processing the video signals in a way that the filtered intensified fluorescent video is overlaid onto the unfiltered video and displayed on the user interface.

22. A method according to claim 21 further comprising the step of multiplexing the two video signals in a way that only one video channel is being used to transmit the video signals to the second subsystem.

23. A method according to claim 21 or claim 22 further comprising the step of saving screenshots or video footages so they can be used for reference of further analysis at a later stage.

24. A method according to any of the claims 21 to 23 comprising the step of transmitting a video signal to a subsystem located at or on the surface of the water.

## Patentansprüche

1. Vorrichtung zur Detektieren von Leckagen von fluoreszierendem Material aus Rohren oder Behältern, wobei die Vorrichtung umfasst: ein Anregungsmittel (1) zum Bewirken einer Fluoreszenz des austretenden Fluids in einem zu prüfenden Bereich, ein Empfangsmittel (3) zum Empfangen eines Bildes der induzierten Fluoreszenz des austretenden Fluids in dem zu prüfenden Bereich, ein Empfangsmittel zum Empfangen eines Bildes der beobachteten Szene des zu prüfenden Bereichs, ein Verarbeitungsmittel (4) zum Verarbeiten und Analysieren des empfangenen Fluoreszenz-Bildes des zu prüfenden Bereichs und Überlagern desselben mit einem Live-Video der Szene des zu prüfenden Bereichs, um die Position und die Stärke der Leckage zu bestimmen.

2. Vorrichtung nach Anspruch 1, ferner umfassend eine Anregereinheit (1) und eine Empfängereinheit (3), die zusammen angeordnet sind.

3. Vorrichtung nach Anspruch 1 oder 2, bei der das Anregungsmittel (1) eine Lichtquelle (11) umfasst, die einen Lichtstrahl in die Richtung projiziert, wo die Messung vorgenommen wird.

4. Vorrichtung nach Anspruch 2 oder 3, bei der die Anregereinheit (1) eine Anordnung von Licht emittierenden Dioden hoher Leistung (11) umfasst.

5. Vorrichtung nach einem der Ansprüche 2 bis 4, bei der die Anregereinheit (1) ein optisches Bandpassfilter (12) zum Auswählen der bevorzugten Anregungswellenlänge umfasst.

6. Vorrichtung nach einem der Ansprüche 2 bis 5, bei der die Empfängereinheit (3) eine hochverstärkende Bildkamera (16) umfasst, in der Regel eine verstärkte Kamera, die in die gleiche Richtung wie die Anregereinheit gerichtet ist.

7. Vorrichtung nach Anspruch 6, bei der die hochverstärkte Bildkamera (16) ein optisches Schmalbandfilter (13) umfasst, um die bevorzugte Fluoreszenzwellenlänge, die sich von der bevorzugten Anregungswellenlänge unterscheidet, auszuwählen.

8. Vorrichtung nach Anspruch 7, bei der die bevorzugte Fluoreszenzwellenlänge außerhalb der Bandpass-Anregungswellenlänge liegt und in den meisten Fällen eine längere Wellenlänge ist.

9. Vorrichtung nach einem der Ansprüche 6 bis 8, bei der die Empfängereinheit (3) eine zweite Kamera (18) umfasst, die in die gleiche Richtung wie die Anregereinheit gerichtet ist, um ein Überlagerungsbild der zu überwachenden Struktur bereitzustellen.

10. Vorrichtung nach Anspruch 9, bei der die zweite Kamera (18) an der hochverstärkten Kamera (16) starr montiert ist.

11. Vorrichtung nach einem der vorhergehenden Ansprüche, bei der die Vorrichtung umfasst: ein erstes Teilsystem (1, 3), das sich unterhalb der Wasseroberfläche befindet, und ein zweite Teilsystem (5), das sich an oder über der Wasseroberfläche befindet, wobei das erste und zweite Teilsystem durch eine Kommunikations- und Stromverbindung verbunden sind.

12. Vorrichtung nach Anspruch 11, wobei das erste Teilsystem umfasst: ein Unterwasserempfangsmittel (3) zum Empfangen eines spektral gefilterten Fluoreszenzvideosignals und ein zweites Empfangsmittel (3) zum Empfangen eines spektral ungefilterten Videosignals und ein Unterwasser-Verarbeitungsmittel (4) zur Weiterleitung der empfangenen Videosignale an das zweite Teilsystem (5).

13. Vorrichtung nach Anspruch 11 oder 12, wobei das zweite Teilsystem (5) eine Verarbeitungseinheit (4), eine Steuereinheit und eine Benutzerschnittstelle umfasst.

14. Vorrichtung nach einem der Ansprüche 11 bis 13, wobei das zweite Teilsystem (5) für eine Verbindung mit einem entfernten Server konfiguriert ist, um das Videosignal zu einem entfernten Punkt weiterzuleiten.

15. Vorrichtung nach einem der Ansprüche 11 bis 14, wobei das erste Teilsystem (1, 3) in einem Maße armiert ist, das angemessen ist, Schäden an jeglicher ihrer Einheiten während des Unterwassereinsatzes zu verhindern.

16. Vorrichtung nach einem der Ansprüche 11 bis 15, sofern abhängig von Anspruch 2, bei der das erste Teilsystem (1, 3) dafür konfiguriert ist, an einem starren Rahmen befestigt zu werden, um die Anregungseinheit und die Empfangseinheiten in die richtige Position zu bringen, um in dem austretenden Material Fluoreszenz anzuregen und die resultierenden Videosignale zu empfangen.

17. Vorrichtung nach Anspruch 16, bei der der Rahmen für einen Einsatz mittels einer Plattform, wie etwa ROV (fernbediente Fahrzeuge) oder AUV (autonome Unterwasserfahrzeuge), konfiguriert ist, so dass die Anregungseinheit und die Empfangseinheiten in die richtige Nähe des zu prüfenden Bereichs gebracht werden.

18. Vorrichtung nach einem der Ansprüche 11 bis 17, wobei das erste Teilsystem (1, 3) ein Mittel zum Übermitteln des Videosignals in Echtzeit an das oberseitige Teil (5) umfasst, so dass die Leckagen in Echtzeit im Verlauf der Überprüfung identifiziert werden.

19. Vorrichtung nach Anspruch 2, bei der die Anregereinheit (1) für den Betrieb unter Wasser bis hinab in die Arbeitstiefe von Tauchfahrzeugen konfiguriert ist.

20. Vorrichtung nach Anspruch 2, bei der die Empfangseinheit des ersten Teilsystems (1) ein Mittel zum Aufzeichnen eines Live-Videosignals (16) des zu prüfenden Bereichs umfasst.

21. Verfahren zur Detektion von Leckagen von fluoreszierendem Material, wobei das Verfahren die folgenden Schritte umfasst:
Induzieren eines Anregungslichts in einen zu überprüfenden Bereich der zu untersuchenden Struktur;
Detektieren eines gefilterten verstärkten Fluoreszenz-Videosignal aus dem zu prüfenden Bereich und Weiterleiten des Signals an das zweite Teilsystem;
Detektieren eines ungefilterten Videosignals aus dem zu prüfenden Bereich und Weiterleiten des Signals an das zweite Teilsystem: und
Verarbeiten der Videosignale in einer Weise, dass das gefilterte verstärkte Fluoreszenzvideo mit dem ungefilterten Video überlagert wird und auf der Benutzeroberfläche angezeigt wird.

22. Verfahren nach Anspruch 21, ferner umfassend den folgenden Schritt:
Multiplexieren der beiden Videosignale in einer Weise, dass nur ein Videokanal verwendet wird, um die Videosignale an das zweite Teilsystem zu übertragen.

23. Verfahren nach Anspruch 21 oder 22, ferner umfassend den folgenden Schritt:
sicheres Speichern von Bildschirmkopien oder Videoaufnahmen, so dass zu einem späteren Zeitpunkt bei weiteren Analysen auf sie zurückgegriffen werden kann.

24. Verfahren nach einem der Ansprüche 21 bis 23, umfassend den folgenden Schritt:
Übertragen eines Videosignals an ein Teilsystem, das sich an bzw. auf der Wasseroberfläche befindet.

## Revendications

1. Appareil pour détecter des fuites de matière fluorescente à partir de tuyaux ou de conteneurs, l'appareil comprenant des moyens d'excitation (1) pour provoquer une fluorescence du fluide qui fuit dans une zone sous inspection, des moyens de réception (3) pour recevoir une image de la fluorescence induite du fluide qui fuit dans la zone sous inspection, des moyens de réception pour recevoir une image de la scène observée de la zone sous inspection, des moyens de traitement (4) pour traiter et analyser l'image de fluorescence reçue de la zone sous inspection et la superposer à une vidéo en direct de la scène de la zone sous inspection, pour déterminer la position et l'importance de la fuite.

2. Appareil selon la revendication 1 comprenant en outre une unité d'excitation (1) et une unité de réception (3) montées ensemble.

3. Appareil selon la revendication 1 ou 2, dans lequel les moyens d'excitation (1) comprennent une source de lumière (11) qui projette un faisceau de lumière dans la direction dans laquelle la mesure est effectuée.

4. Appareil selon la revendication 2 ou 3, dans lequel l'unité d'excitation (1) comprend un réseau de diodes électroluminescentes de forte puissance (11).

5. Appareil selon l'une quelconque des revendications 2 à 4, dans lequel l'unité d'excitation (1) comprend un filtre passe-bande optique (12) pour sélectionner la longueur d'onde d'excitation préférée.

6. Appareil selon l'une quelconque des revendications 2 à 5, dans lequel l'unité de réception (3) comprend une caméra de formation d'image à gain élevé (16), généralement une caméra à intensification qui est dirigée dans la même direction que l'unité d'excitation.

7. Appareil selon la revendication 6, dans lequel la caméra à haute intensification (16) comprend un filtre passe-bande optique étroit (13) pour sélectionner une longueur d'onde de fluorescence préférée qui est différente de la longueur d'onde d'excitation préférée.

8. Appareil selon la revendication 7, dans lequel la longueur d'onde de fluorescence préférée est différente de la longueur d'onde d'excitation passe-bande et dans la plupart des cas une plus grande longueur d'onde.

9. Appareil selon l'une quelconque des revendications 6 à 8, dans lequel l'unité de réception (3) comprend une deuxième caméra (18) qui est dirigée dans la même direction que l'unité d'excitation, pour fournir une image de superposition de la structure sous surveillance.

10. Appareil selon la revendication 9, dans lequel la deuxième caméra (18) est montée rigidement sur la caméra à haute intensification (16).

11. Appareil selon l'une quelconque des revendications précédentes, dans lequel l'appareil comprend un premier sous-système (1, 3) situé au-dessous de la surface de l'eau, et un deuxième sous-système (5) situé au niveau ou au-dessus de la surface de l'eau, les premier et deuxième sous-systèmes étant connectés par une liaison de communication et de puissance.

12. Appareil selon la revendication 11, dans lequel le premier sous-système comprend des moyens de réception sous l'eau (3) pour recevoir un signal vidéo de fluorescence filtré spectralement, et des deuxièmes moyens de réception (3) pour recevoir un signal vidéo non filtré spectralement, et des moyens de traitement sous l'eau (4) pour relayer les signaux vidéo reçus vers le deuxième sous-système (5).

13. Appareil selon la revendication 11 ou 12, dans lequel le deuxième sous-système (5) comprend une unité de traitement (4), une unité de commande et une interface utilisateur.

14. Appareil selon l'une quelconque des revendications 11 à 13, dans lequel le deuxième sous-système (5) est configuré pour une connexion à un serveur à distance afin de relayer le signal vidéo vers un point à distance.

15. Appareil selon l'une quelconque des revendications 11 à 14, dans lequel le premier sous-système (1, 3) est renforcé à une norme adéquate pour éviter un endommagement de l'une quelconque de ses unités pendant un déploiement sous l'eau.

16. Appareil selon l'une quelconque des revendications 11 à 15 lorsqu'elles dépendent de la revendication 2, dans lequel le premier sous-système (1, 3) est configuré pour être fixé sur une structure rigide conçue pour amener l'unité d'excitation et les unités de réception à la position correcte pour exciter une fluorescence dans la matière qui fuit, et pour recevoir les signaux vidéo résultants.

17. Appareil selon la revendication 16, dans lequel la structure est configurée pour un déploiement par une plateforme telle que ROV ou AUV de sorte que l'unité d'excitation et les unités de réception soient amenées à proximité correcte de la zone sous inspection.

18. Appareil selon l'une quelconque des revendications 11 à 17, dans lequel le premier sous-système (1, 3) comprend des moyens d'acheminement du signal vidéo en temps réel vers la partie supérieure (5) de sorte que les fuites puissent être identifiées en temps réel au cours de l'inspection.

19. Appareil selon la revendication 2, dans lequel l'unité d'excitation (1) est configurée pour un fonctionnement sous l'eau jusqu'à une profondeur de fonctionnement des véhicules submersibles.

20. Appareil selon la revendication 2, dans lequel l'unité de réception du premier sous-système (1) comprend des moyens pour enregistrer un signal vidéo en direct (16) de la zone sous inspection.

21. Procédé de détection de fuites de matière fluorescente, le procédé comprenant les étapes :
d'application d'une lumière d'excitation à une zone sous inspection de la structure à étudier ;
de détection d'un signal vidéo de fluorescence intensifié filtré provenant de la zone sous inspection et de relayage du signal vers le deuxième sous-système ;
de détection d'un signal vidéo non filtré provenant de la zone sous inspection et de relayage du signal vers le deuxième sous-système ; et
de traitement des signaux vidéo de manière à ce que la vidéo de fluorescence intensifiée filtrée soit superposée à la vidéo non filtrée et affichée sur l'interface utilisateur.

22. Procédé selon la revendication 21, comprenant en outre l'étape de multiplexage des deux signaux vidéo de manière à ce qu'un seul canal vidéo soit utilisé pour transmettre les signaux vidéo au deuxième sous-système.

23. Procédé selon la revendication 21 ou la revendication 22 comprenant en outre l'étape de sauvegarde des captures d'écran ou des séquences vidéo, de sorte qu'elles puissent être utilisées en tant que référence pour une analyse supplémentaire à une étape ultérieure.

24. Procédé selon l'une quelconque des revendications 21 à 23 comprenant l'étape de transmission d'un signal vidéo à un sous-système situé au niveau de la surface de l'eau ou sur celle-ci.
